# EUROPEAN PATENT APPLICATION

(11) **EP 1 251 511 A1**
(43) Date of publication of application: **23.10.2002**
(21) Application number: 01310183.7
(22) Date of filing: 05.12.2001
(51) Int. Cl.: G11B 20/18

(54) **Optical recording medium, data recording apparatus and data recording method used by the apparatus**

(30) Priority: 20.04.2001 KR 2001021520; 09.07.2001 KR 2001040897
(71) Applicant: SAMSUNG ELECTRONICS CO., LTD., Suwon-City, Kyungki-do (KR)
(72) Inventor: Hwang, Sung-hee, Gangnam-gu, Seoul (KR); Lee, Yoon-woo, Paldal-gu, Auwon-si, Gyeonggi-do (KR); Han, Sung-hyu, Youngdeungpo-gu, Seoul (KR); Ryu, Sang-hyun, Paldal-gu, Suwon-si, Gyeonggi-do (KR)
(74) Representative: Parkinson, Neil Scott

(57) **Abstract**

An optical recording medium, a data recording apparatus, and a data recording method used by the apparatus are provided. In a method for recording data on an optical disc (900), each of a plurality of error correction code (ECC) blocks is divided into a plurality of partitions. Next, data from the partitions are interleaved so that each of the ECC blocks is alternately and equally selected to generate a recording block. The generated recording block is modulated and recorded on an optical disc (900). As a result, the optical recording medium, the data recording apparatus, and the data recording method used by the apparatus are provided, which are compatible with the format of a conventional digital versatile disc (DVD) and have higher error correction rates.

## Description

The present invention relates to error correction, and more particularly, to an optical recording medium, a data recording apparatus, and a data recording method used by the apparatus which are capable of recording high density data.

Digital broadcasting will soon be commonly used in many countries of the world. However, current digital versatile discs (DVDs) have a capacity of 4.7-10 gigabytes, and thus a two-hour movie (about 25 gigabytes) which is received via digital broadcasting cannot be recorded in a disc. As a result, a high density recording medium for recording a digital broadcast having the size of a movie is required.

A method for reducing the size of a laser beam used in recording/reading data is a representative example of a method for increasing recording density. The smaller the radius of the laser beam the more densely an information track in which data are recorded can be formed, thereby increasing recording density. However, if only the radius of the laser beam is decreased, the quantity of light used in recording/reading data is also reduced, and the effect caused by damage or dust occurring on the surface of the disc is relatively increased. That is, the error generation rate in recording/reading data is increased.

It is an aim of embodiments of the present invention to provide an optical recording medium, a data recording apparatus, and a data recording method used by the apparatus, which have higher error correction rates in recording/reading data.

It is also an aim of embodiments of the present invention to provide an optical recording medium, a data recording apparatus, and a data recording method used by the apparatus, which are compatible with the format of a conventional digital versatile disc (DVD) and which have higher error correction rates.

According to one aspect of the present invention, there is provided a method for recording data on an optical disc, the method comprising the steps of:
dividing each of a plurality of error correction code (ECC) blocks into a plurality of partitions; and
interleaving data from the partitions so that each of the ECC blocks is alternately and equally selected to generate a recording block.

It is preferable that the method further includes the step of (c) rearranging the generated recording block to generate a new recording block, and the generated recording block is rearranged on a sector basis to generate the new recording block in the step (c).

It is also preferable that the method further includes the steps of (d) modulating the generated recording block, and (e) recording the modulated recording block.

It is also preferable that the step (a) includes the steps of (a11) dividing each of the ECC blocks in a column direction by a predetermined number of bytes into object blocks, and (a12) dividing each of the object blocks in at least one direction of row and column directions by a predetermined number of bytes to generate a plurality of partitions.

It is also preferable that the step (b) of interleaving is performed with the same algorithm in units of the object blocks.

It is also preferable that the step (a) includes the steps of (a21) obtaining a common divisor **d** for N1 and N2 when the size of the ECC blocks is N1xN2 bytes, (a22) dividing each of the ECC blocks into units of **d** bytes in the column direction to generate a number N2/d of object blocks, and (a23) dividing each of the object blocks which are generated by the step (a22) into a number **d** of portions in the column and row directions to generate a number d x d of partitions.

The method includes the steps of (a) dividing each of two error correction code (ECC) blocks in row and column directions to generate a plurality of partitions, and (b) interleaving data from the partitions so that each of the ECC blocks is alternately and equally selected to generate a recording block.

It is preferable that the data of the partitions are interleaved such that a number 2 x N2 of row-code words are included in the block obtained after interleaving the data in the step (b), and the ECC blocks have row-code words (N1, k1), and column-code words (N2, k2), and the block including 2 x N2 row-code words is converted to generate a recording block which includes a main data region of 2 x (N2-k2) bytes and an outer parity region of 2 x k2 bytes in the step (c), wherein N1 and k1 indicate the length of a code word, respectively, and N2 and k2 indicate the number of a parity, respectively.

According to another aspect of the present invention, there is provided an apparatus for recording data on an optical disc, the apparatus comprising:
An error correction code (ECC) encoder (11) for generating at least two error correction code (ECC) blocks; and
an interleaver (12) for dividing each of the two generated ECC blocks by a first unit in the row direction and by a second unit in the column direction so as to generate a plurality of partitions, alternately extracting data of the plurality of partitions from each of the ECC blocks, and interleaving the extracted data and generating a recording block.

The apparatus preferably includes an error correction code (ECC) encoder for generating a plurality of error correction code (ECC) blocks in which main data are recorded, and an interleaver including a partitioning portion for dividing each of the generated ECC blocks by a first unit in the row direction and by a second unit in the column direction so as to generate a plurality of partitions, a data extracting portion for alternately extracting data of the partitions from each of the ECC blocks, and a recording block generating portion for interleaving the extracted data and generating a recording block.

It is preferable that the apparatus further includes a modulating part for modulating the generated recording block, and a recording part for recording the modulated recording block.

It is also preferable that the partitioning portion divides each of the ECC blocks in the column direction by a predetermined number of bytes and divides each of the ECC blocks in the row direction by a predetermined number of bytes to generate a plurality of partitions, and the recording block generating portion sequentially interleaves the extracted data to generate a recording block, and the partitioning portion obtains a common divisor d for N1 and N2 when the size of the ECC blocks is N1xN2 bytes, and then divides each of the ECC blocks by a unit of **d** bytes in the column direction to generate a plurality of object blocks, and then divides each of the object blocks into a number **d** of portions in the column and row directions to generate a number d x d of partitions.

It is also preferable that the interleaver divides each of the ECC blocks in a column direction by a predetermined number of bytes to generate a plurality of object blocks and divides each of the object blocks in column and row directions by a predetermined number of bytes to generate a plurality of partitions, and the interleaver obtains a common divisor **d** for N1 and N2 when the size of the ECC blocks is N1xN2 bytes, and then divides each of the ECC blocks by a unit of **d** bytes in the column direction to generate a plurality of object blocks, and then divides each of the object blocks into a number **d** of portions in the column and row directions to generate a number d x d of partitions, and the data of the partitions are interleaved such that a number 2 x N2 of row-code words are included in the block obtained after interleaving the data, and the ECC encoder generates the ECC blocks having row-code words (N1, k1), and column-code words (N2, k2), and the interleaver converts a block including 2 x N2 row-code words to generate a recording block which includes a main data region of 2 x (N2-k2) bytes and an outer parity region of 2 x k2 bytes in the step (c) .

According to another aspect of the present invention, there is provided an optical recording medium (900) containing data included in one or more recording blocks, wherein the data from partitions of a plurality of ECC blocks are interleaved in the recording blocks.

Particularly, it is preferable that the data from the partitions are interleaved so that each of the ECC blocks is alternately and equally selected.

For a better understanding of the invention, and to show how embodiments of the same may be carried into effect, reference will now be made, by way of example, to the accompanying diagrammatic drawings in which:
Figures 1A and 1B are block diagrams of a data recording apparatus according a preferred embodiment of the present invention;
Figures 2A and 2B illustrate the format of error correction code (ECC) blocks which are interleaved according to an embodiment of the present invention;
Figure 3 illustrates the format of a block generated by interleaving of Figure 2;
Figure 4 illustrates numbers which are allocated to N1/d bytes of data belonging to a partition 1_1;
Figure 5 illustrates a recording block rearranged on the basis of the block of Figure 3;
Figure 6 is an example of the ECC blocks A and B of Figure 2;
Figure 7 illustrates the format of the block generated by interleaving of Figure 5;
Figure 8 illustrates a recording block rearranged on the basis of the block of Figure 6;
Figure 9 illustrates the largest error that can be corrected by error correction according to an embodiment of the present invention; and
Figures 10A and 10B are block diagrams of a data reproducing apparatus according to a preferred embodiment of the present invention.

Hereinafter, a preferred embodiment of the present invention will be described in detail with reference to the accompanying drawings.

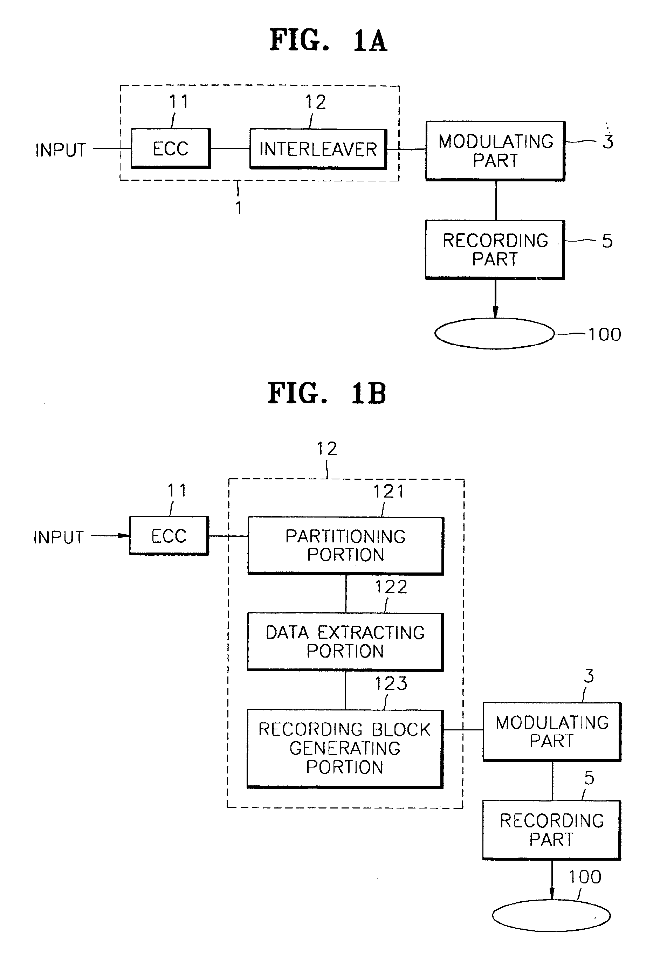

Figures 1A and 1B are block diagrams of a data recording apparatus according a preferred embodiment of the present invention. Referring to Figure 1A, the data recording apparatus includes an error correction code (ECC) encoding part 1, a modulating part 3, and a recording part 5. The ECC encoding part 1 includes an ECC encoder 11 and an interleaver 12. The interleaver 12 includes a partitioning portion 121, a data extracting portion 122, and a recording block generating portion 123. The ECC encoder 11 encodes main data with an error-correction-code (ECC). The interleaver 12 interleaves the ECC-encoded main data and generates a recording block. Interleaving is done to increase error correction efficiency and is a method for physically distributedly recording contiguous main data in ECC blocks on an optical disc. A burst error can be very effectively corrected by interleaving.

In order to perform interleaving, the partitioning portion 121 divides each of the generated ECC blocks in a row direction and a column direction to generate a plurality of partitions. The data extracting portion 122 alternately extracts the data of the partitions from each of the ECC blocks so that each of the ECC blocks is alternately and equally selected. For example, in a case where there are a number N of ECC blocks, they may be selected in the order of 1, 2, 3, ..., N-1, N. The recording block generating portion 123 interleaves the extracted data to generate a recording block. A more specific interleaving method will be described later.

The modulating part 3 modulates the recording block generated by the ECC encoding part 1 according to a predetermined modulating method. The modulating method used in this embodiment is eight to fourteen modulation plus (EFM+), that is, a method for modulating each byte of the recording block data into a 16 bit code word. The recording part 5 records the modulated recording block on an optical disc 100. When recording the modulated recording block on the optical disc 100, a channel bit pulse stream is recorded. A modulated bit stream is converted into the channel bit pulse stream by non return to zero inversion (NRZI) coding. Here, various converting methods for recording the channel bit pulse stream can be used.

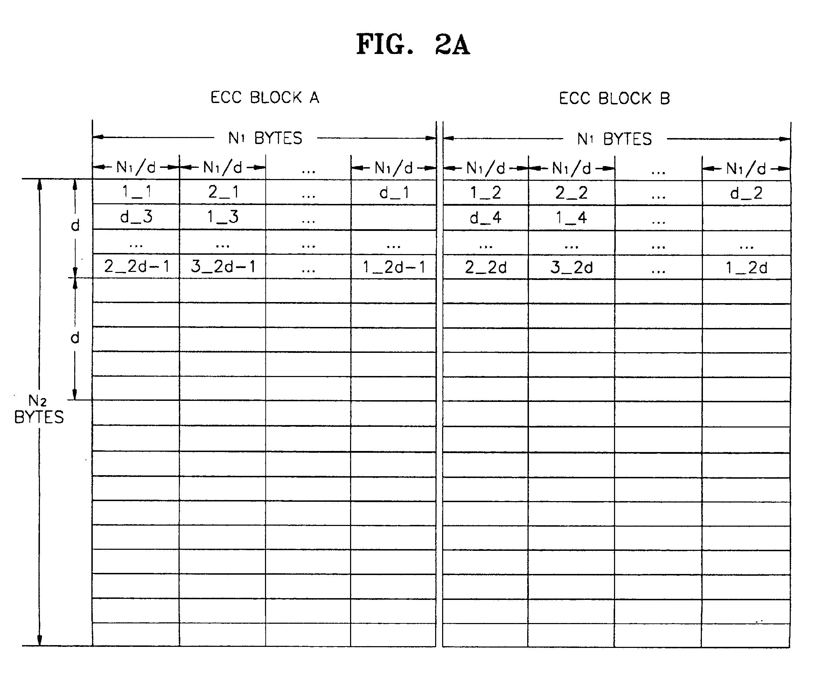

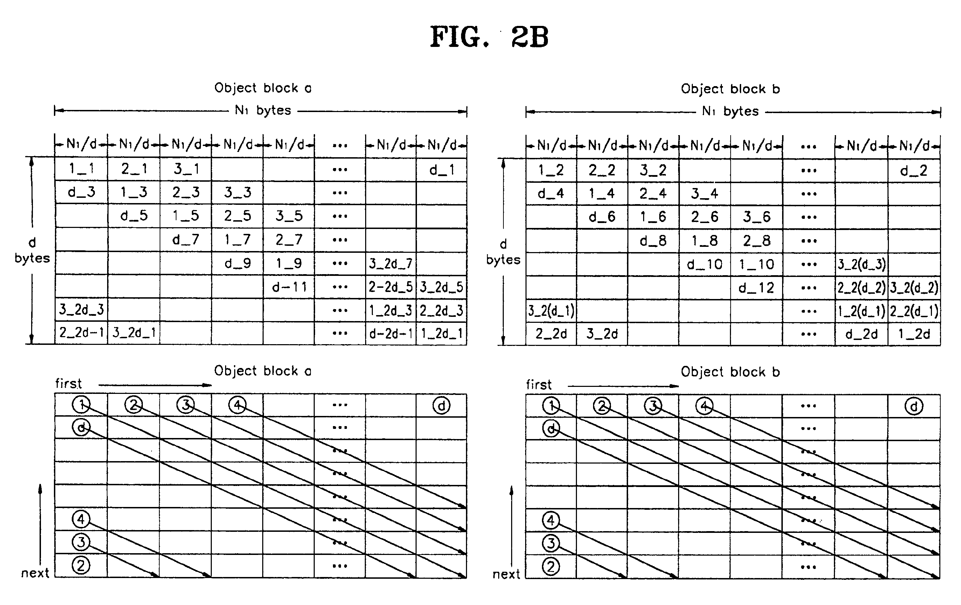

Figures 2A and 2B illustrate the format of ECC blocks which are interleaved. Referring to Figure 2A, each of ECC blocks A and B consists of N1 bytes of data in a row direction, and N2 bytes of data in a column direction. Row-code words consisting of main data and an inner parity are arranged in a row direction. Here, a predetermined number of row-code words constitute one sector. Therefore, at least one sector is arranged in a column direction, and row-code words having an identifier ID are included in each sector.

The row-code words can be obtained by Reed-Solomon Product coding. That is, each row is a RS (N1, m, p) code. Here, N1 is the total size of the code words, m is the size of the main data, and p is the number of parity bits plus one bit. Since Reed-Solomon Product coding is good at correcting multi-errors and is used in digital versatile discs (DVD), Reed-Solomon Product coding is selected for compatibility with DVDs. However, the coding method used can be changed when needed. Similarly, the size of the ECC blocks and the number of bytes allocated to the parity can be changed. The identifier ID and a parity for error detection EDC are included in each sector. The address of the main data included in the corresponding sector is recorded in the identifier ID. Thus, the main data can be searched by the identifier ID.

Interleaving for constituting a recording block is performed on the basis of the following.

As shown in Figure 2A, first, each of the ECC blocks A and B is divided by a unit of **d** rows in a column direction. Here, **d** is a common divisor for N1 and N2. Blocks which are obtained by dividing by a unit of **d** rows in a column direction are referred to as object blocks shown in Figure 2B. Interleaving according to this embodiment of the present invention is repeatedly performed by a unit of two object blocks a and b, which belong to the ECC blocks A and B.

Referring to Figure 2B, more specifically, an interleaving algorithm will be described as follows.

First, the object blocks a and b are divided into units of 1 byte in the column direction and are divided into units of d bytes in the row direction. As a result, each of the object blocks a and b are divided into a number d x d of partitions, giving a total of 2 x d x d partitions. These partitions are 1_1, 1_2, ..., 1_2 x d, 2_1, 2_2, ..., 2_2 x d, ..., d_1, d_2, ..., and d_2 x d.

There are N1/d bytes of data in the partitions such as 1_1, 1_2, ..., 1_2 x d, 2_1, 2_2, ..., 2_2 x d, ... , d_1, d_2, ..., and d_2 x d, which are finally obtained.

Next, data is extracted from the partitions in numerical order. That is, first data is extracted from the partition 1_1, second, from the partition 1_2, ..., and (2 x d)-th, from the partition 1_2 x d. Again, (2 x d +1)-th, data is extracted from the partition 1_1, and (2 x d +2)-th, from the partition 1_2, ..., and (2 x d +2 x d)-th, from the partition 1_2 x d. In this order, all data is extracted from the partitions 1_1, 1_2, ..., 1_2 x d, and then, data is alternately extracted from the partitions 2_1, 2_2, ..., 2_2 x d.

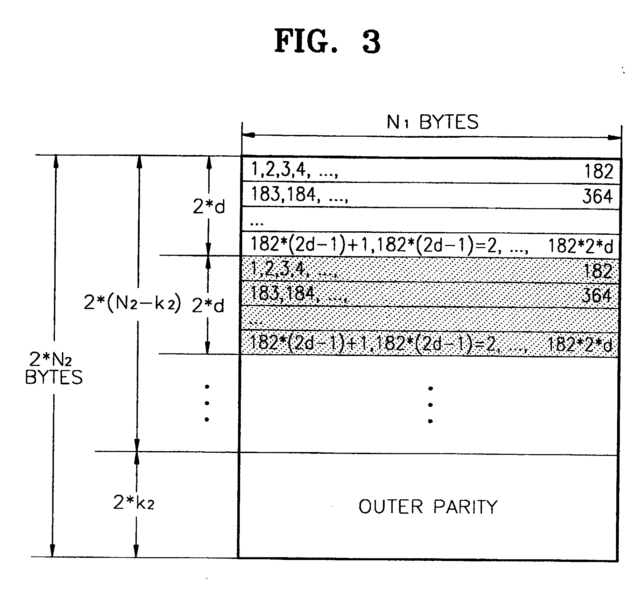

The above procedure is performed repeatedly in units of object blocks. The recording block generated as a result of performing the above procedure is shown in Figure 3.

Referring to Figure 3, the block generated according to Figures 2A and 2B is comprised of main data of a 2 x (N2-k2) row and an outer parity of a 2 x k2 row. The numbers recorded in the row direction of the recording block represent serial numbers which are allocated to bytes of data existing in each of the partitions. That is, if interleaving is performed, as described with reference to Figure 2, bytes of data are arranged in the order shown in Figure 3. The generated block can be rearranged on the basis of a sector of 2KB.

Meanwhile, for simplification, a method for numbering serial numbers of the object blocks a and b, will be now described. Since there are N1/d bytes of data in each of the partitions of the object blocks a and b, the following serial numbers are allocated to each of the partitions of the object blocks a and b.

Partition 1_1: N1/d of numbers having a remainder of 1 when divided by 2 x d among numbers 1_2 x N1, are sequentially arranged.

Partition 1_2: N1/d of numbers having a remainder of 2 when divided by 2 x d among numbers of 1_2 x N1, are sequentially arranged.

. . .

Partition 1_2 x d: N1/d of numbers having a remainder of 0 when divided by 2 x d among numbers 1_2 x N1, are sequentially arranged.

Partition 2_1: N1/d of numbers having a remainder of 1 when divided by 2 x d among numbers 2 x N1+1_2 x N1+2 x N1, are sequentially arranged.

Partition 2_2: N1/d of numbers having a remainder of 2 when divided by 2 x d among numbers 2 x N1+1_2 x N1+2 x N1, are sequentially arranged.

. . .

Partition 2_2 x d: N1/d of numbers having a remainder of 0 when divided by 2 x d among numbers 2 x N1+1_2 x N1+2 x N1, are sequentially arranged.

. . .

Partition d_1: N1/d of numbers having a remainder of 1 when divided by 2 x d among numbers (d_1) x 2 x N1+1_d x 2 x N1, are sequentially arranged.

Partition d_2: N1/d of numbers having a remainder of 2 when divided by 2 x d among numbers (d_1) x 2 x N1+1_d x 2 x N1, are sequentially arranged.

. . .

Partition d_2 x d: N1/d of numbers having 0 of a remainder when divided by 2 x d among numbers (d_1) x 2 x N1+1_d x 2 x N1, are sequentially arranged.

This is generalized as following:
m_n: N1/d of numbers having a remainder of n when divided by 2 x d among numbers of (m-1) x 2 x N1+1_m x 2 x N1 is n, are sequentially arranged.

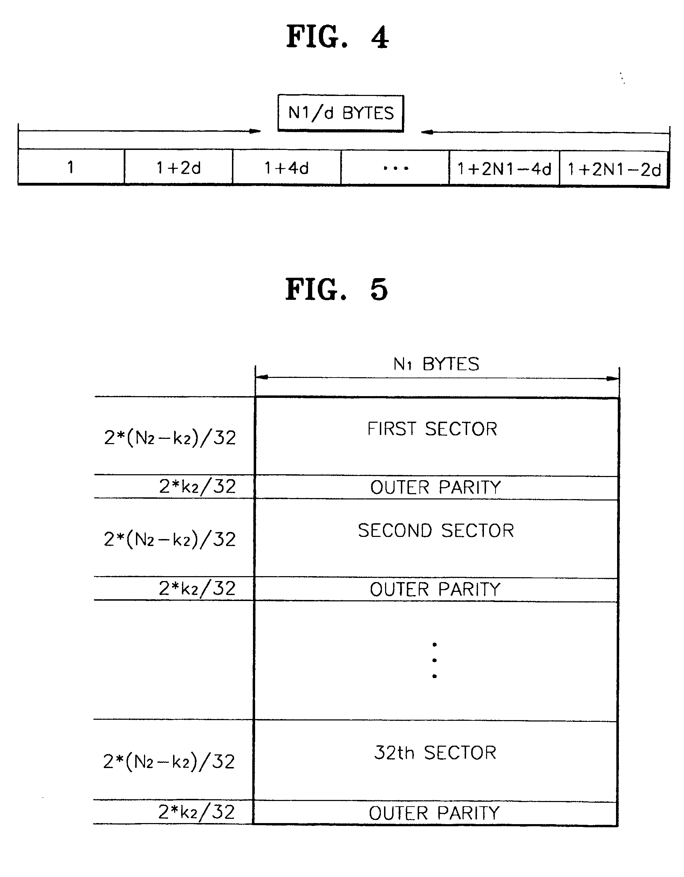

Referring to Figure 4, for example, numbers such as 1, 1+2d, 1+4d, ..., 1+2N1-4d, and 1+2N1-2d , are sequentially allocated to N1/d bytes of data belonging to the partition 1_1. That is, there are N1/d bytes of data in the partition 1_1, 1 is allocated to a first byte of the N1/d bytes of data, 1+2d to a second byte of the N1/d bytes of data, 1+4d to a third byte of the N1/d bytes of data, ... , 1+2N1-4d to a {(N1/d)-1}-th byte of the N1/d bytes of data, and 1+2N1-2d to a (N1/d)-th byte of the N1/d bytes of data.

Figure 5 illustrates a recording block rearranged on the basis of the block of Figure 3. Referring to Figure 5, 2 x (N2-k2)/ 32 rows are extracted from the block of Figure 3, and arranged, and 2 x k2/32 rows are extracted from the outer parity and arranged, thereby forming one sector. The number of sectors generated by the above procedure is 32 in total. The reason for forming 32 sectors is that one error correction code (ECC) block in DVDs is comprised of 16 sectors. In other words, compatibility with DVDs is considered. The range of a burst error correction which can be corrected by Reed-Solomon Product codes in conventional DVDs is 16 rows x 182 bytes + 10 bytes, that is, 2,922 bytes.

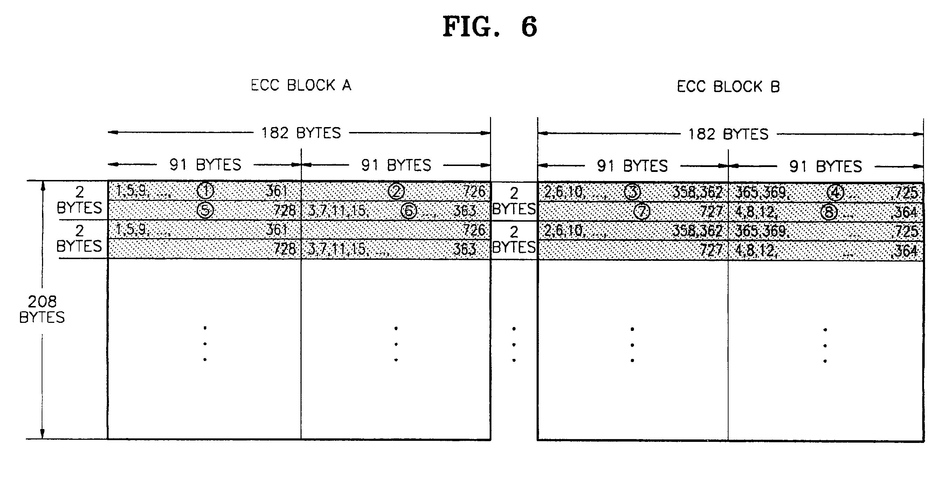

Figure 6 is an example of the ECC blocks A and B of Figure 2. Referring to Figure 6, the ECC blocks A and B denote a case where N1=182 bytes, N2=208 bytes, and d=2. In this case, the recording block is generated by interleaving as described below.

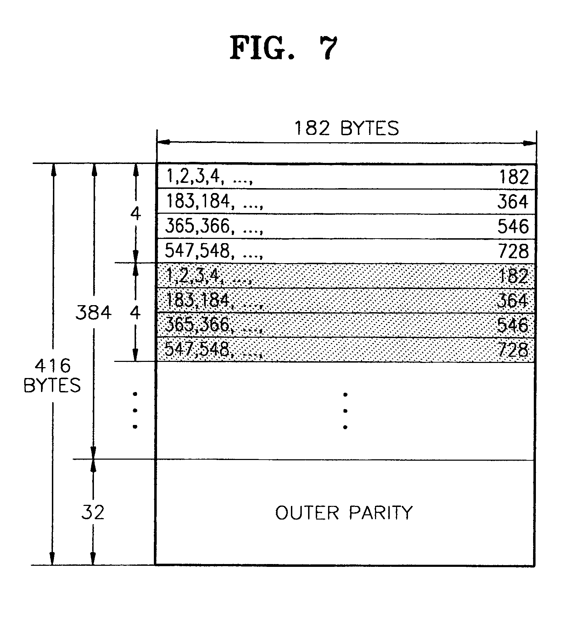

First, each of the ECC blocks A and B is divided into object blocks in a unit of 2 rows in a row direction. As a result, a total of eight partitions such as ①, ②, ③, ④, ⑤, ⑥, ⑦ and ⑧, exist in the object blocks a and b. Next, first data is extracted from the partition ①, second data is extracted from the partition ③, third data is extracted from the partition ⑥, and fourth data is extracted from the partition ⑧. Again, fifth data is extracted from the partition ①, sixth data is extracted from the partition ③, seventh data is extracted from the partition ⑥, and eighth data is extracted from the partition ⑧. In this way, after extracting all data from the partitions ①, ③, ⑥, and ⑧, again, data is alternately extracted from the partitions ②, ④, ⑤, and ⑦. The above procedure is performed repeatedly in a unit of 2 rows. The recording block generated as a result of performing the above procedure is shown in Figure 7.

Referring to Figure 7, the recording block generated according to Figure 5 is comprised of 384 rows of data and an outer parity of 32 rows. Similarly, numbers shown in Figure 7 represent serial numbers which are allocated to bytes of data, as described with reference to Figures 3 and 4. Meanwhile, the generated recording block can be rearranged on a sector basis.

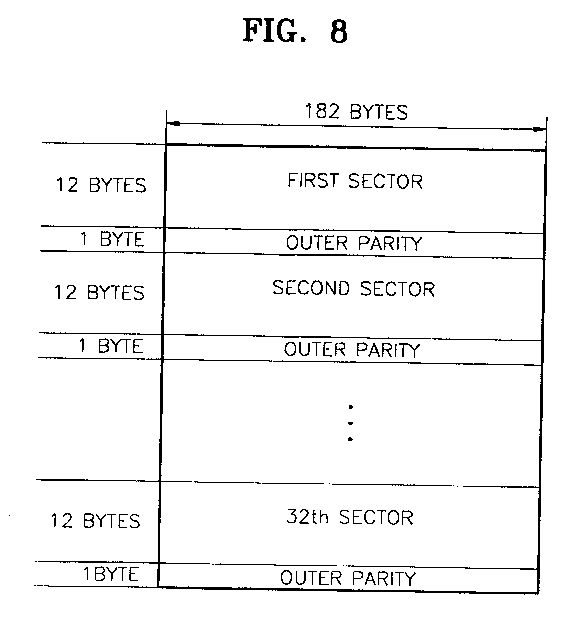

Figure 8 illustrates a recording block rearranged on the basis of the block of Figure 7. Referring to Figure 8, 12 rows are extracted from a main data region included in the block of Figure 7 and arranged, and 1 row is extracted from the outer parity region and arranged, thereby forming one sector. The number of sectors generated by the above procedure is 32 in total. Since one error correction code (ECC) block in the DVD is comprised of 16 sectors, compatibility with DVDs is considered.

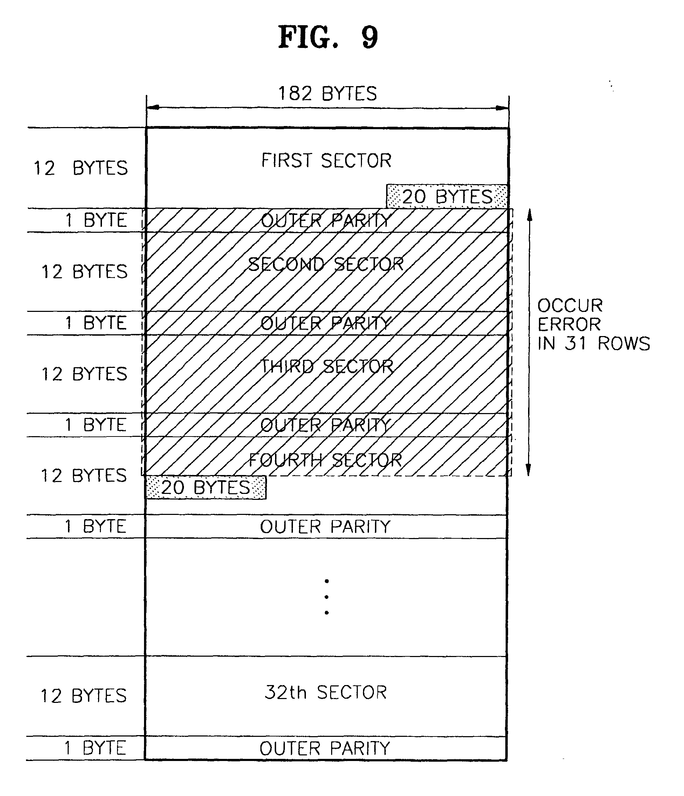

Figure 9 illustrates the largest error that can be corrected by error correction according to an embodiment of the present invention.

For example, the largest error that can be corrected by error correction used in RS(182, 172, 11) x RS(208, 192, 17) is decided as below. Referring to Figure 9, first, in a case where errors occur in 31 consecutive rows and errors of each 20 bytes occur in both head and tail of the 31 consecutive rows, in total, errors of 40 bytes, an outer parity of 3 rows of the errors is converted into an error of 2 rows in the recording block obtained by interleaving, and the main data of 28 rows of the errors are converted into an error of 14 rows in the recording block obtained by interleaving and thus, in total, a code of 16 rows can be corrected by the outer parity. Also, since an error of 20 bytes occurring at the beginning of 31 rows results in an error of 2 rows respectively consisting of one 5 bytes in the recording blocks a and b, the error of 20 bytes can be corrected by the internal parity. Also, an error of 20 bytes occurring at the end of 31 rows results in an error of 2 rows respectively consisting of one 5 bytes in the recording blocks a and b, and thus can be corrected by the inner parity.

Thus, in total, 182 bytes x 31 + 40 bytes = 5, 682 bytes are corrected.

In this way, according to this embodiment of the present invention, interleaving with blocks is performed using two conventional ECC blocks, and interleaving with code words in each block is performed to generate the recording block. As a result, the burst error is distributed into two regions, and the correction ability of the inner parity by interleaving with code words is quadrupled.

Meanwhile, in the above-mentioned embodiment, a method for interleaving two ECC blocks was already described, but it is also possible to apply the method for interleaving to more than two ECC blocks. That is, a common divisor between more than two ECC blocks can be obtained, and then, each ECC block can be divided into a plurality of partitions on the basis of the row of the obtained common divisor. Next, a part of the data, which is included in the divided plurality of partitions, is extracted from the partitions, thereby interleaving the data. The extraction of the data is performed so that each ECC block is alternately and equally selected. The recording block obtained by interleaving can be consecutively recorded as it is or after being rearranged on a sector basis.

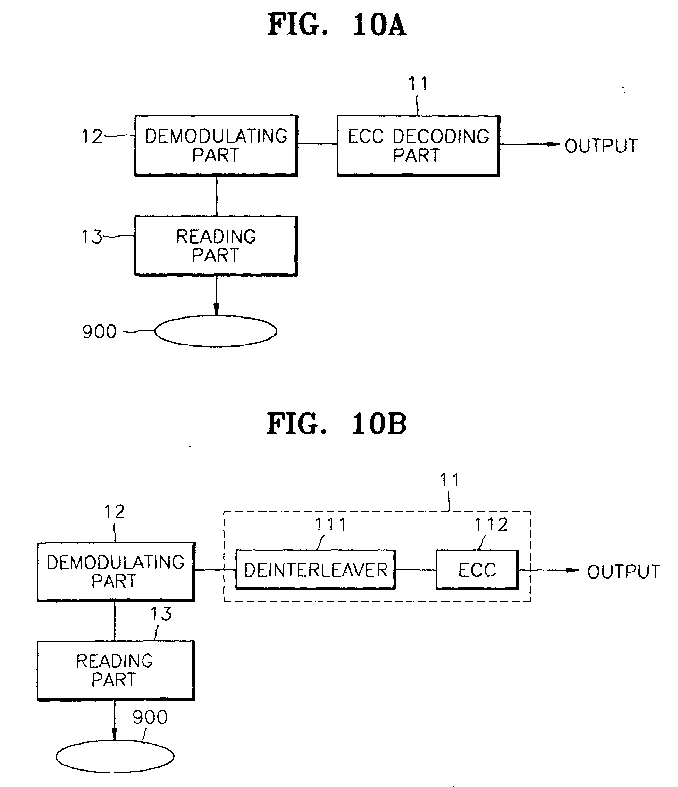

Figures 10A and 10B are block diagrams of a data reproducing apparatus according to an embodiment of the present invention. Referring to Figure 10A, the data reproducing apparatus includes a reading part 13, a demodulating part 12, and an ECC decoding part 11. The reading part 13 reads data from an optical disc 900 on which data is recorded. The demodulating part 12 demodulates the read data. The demodulating method used depends on the modulating method.

The ECC decoding part 11 ECC-decodes the demodulated data, that is, a recording block. More specifically, referring to Figure 10B, the ECC decoding part 11 includes a deinterleaver 111 and an ECC decoder 112. The deinterleaver 111 deinterleaves the recording block in the order reverse to the interleaver 12 of Figure 1B to generate a plurality of error correction code (ECC) blocks. The ECC decoder 112 decodes the demodulated data into main data with an ECC, which is used in the generated ECC block, and outputs the main data.

As described above, the optical recording medium, the data recording apparatus, and the data recording method used by the apparatus, which are compatible with the format of a conventional digital versatile disc (DVD) and have higher error correction rates, are provided.

While this invention has been particularly shown and described with reference to preferred embodiments thereof, it will be understood by those skilled in the art that various changes in form and details may be made therein without departing from the scope of the invention as defined by the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A method for recording data on an optical disc, the method comprising the steps of:
(a) dividing each of a plurality of error correction code (ECC) blocks into a plurality of partitions; and
(b) interleaving data from the partitions so that each of the ECC blocks is alternately and equally selected to generate a recording block.

2. A method as claimed in claim 1, wherein said plurality of ECC blocks is two ECC blocks, and said step of dividing the ECC blocks comprises dividing the ECC blocks in row and column directions.

3. The method as claimed in claim 1 or claim 2, further comprising the step of (c) rearranging the generated recording block to generate a new recording block.

4. The method as claimed in claim 3, wherein the generated recording block is rearranged on a sector basis to generate the new recording block in the step (c).

5. The method as claimed in any one of the above claims, further comprising the steps of:
(d) modulating the generated recording block; and
(e) recording the modulated recording block.

6. The method as claimed in any one of the above claims, wherein the step (a) includes the steps of:
(a11) dividing each of the ECC blocks in a column direction by a predetermined number of bytes into object blocks; and
(a12) dividing each of the object blocks in at least one direction of row and column directions by a predetermined number of bytes to generate a plurality of partitions.

7. The method as claimed in any one of claims 1 to 5, wherein the step (a) includes the steps of:
(a11) dividing each of the ECC blocks in a column direction by a predetermined number of bytes;
(a12) dividing the divided ECC blocks into object blocks so that interleaving is performed with the same algorithm in units of the object blocks; and
(a13) dividing each of the object blocks in row and column directions by a predetermined number of bytes to generate a plurality of partitions.

8. The method as claimed in any one of the above claims, wherein the step (b) of interleaving is performed with the same algorithm in units of the object blocks.

9. The method as claimed in claim 1, wherein a predetermined number of bytes of data are extracted and rearranged to generate the recording block in the step (b).

10. The method as claimed in claim 1, wherein the step (a) includes the steps of:
(a21) obtaining a common divisor **d** for N1 and N2 when the size of the ECC blocks is N1xN2 bytes;
(a22) dividing each of the ECC blocks into units of **d** bytes in the column direction, or alternatively by a unit of **d** bytes in the column direction, to generate a number N2/d of object blocks; and
(a23) dividing each of the object blocks which are generated by the step (a22) into a number **d** of portions in the column and row directions to generate a number d x d of partitions.

11. The method as claimed in claim 10, wherein the data of the partitions are interleaved such that a number 2xN2 of row-code words are included in the block obtained after interleaving the data in the step (b).

12. The method as claimed in claim 10, wherein the ECC blocks have row-code words (N1, k1), and column-code words (N2, k2), and the block including 2xN2 row-code words is converted to generate a recording block which includes a main data region of 2x(N2-k2) bytes and an outer parity region of 2xk2 bytes in the step (c).

13. An apparatus for recording data on an optical disc, the apparatus comprising:
an error correction code (ECC) encoder (11) for generating at least two error correction code (ECC) blocks; and
an interleaver (12) for dividing each of the two generated ECC blocks by a first unit in the row direction and by a second unit in the column direction so as to generate a plurality of partitions, alternately extracting data of the plurality of partitions from each of the ECC blocks, and interleaving the extracted data and generating a recording block.

14. The apparatus as claimed in claim 13, further comprising:
a modulating part (3) for modulating the generated recording block; and
a recording part (5) for recording the modulated recording block.

15. The apparatus as claimed in claim 13 or claim 14, wherein the interleaver (12) divides each of the ECC blocks in the column direction by a predetermined number of bytes and divides each of the ECC blocks in the row direction by a predetermined number of bytes to generate a plurality of partitions.

16. The apparatus as claimed in claim 13, claim 14 or claim 15, wherein the interleaver (12) sequentially interleaves the extracted data to generate a recording block.

17. The apparatus as claimed in any one of claims 13 to 16, wherein the interleaver (12) obtains a common divisor **d** for N1 and N2 when the size of the ECC blocks is N1xN bytes, and then divides each of the ECC blocks by a unit of **d** bytes in the column direction to generate a plurality of object blocks, and then divides each of the object blocks into a number **d** of portions in the column and row directions to generate a number dxd of partitions.

18. The apparatus as claimed in claim 17, wherein the data of the partitions are interleaved such that a number 2xN2 of row-code words are included in the block obtained after interleaving the data.

19. The apparatus as claimed in claim 18, wherein the ECC encoder (1) generates the ECC blocks having row-code words (N1, k1), and column-code words (N2, k2), and
the interleaver (12) converts a block including 2x2N2 row-code words to generate a recording block which includes a main data region of 2x(N2-k2) bytes and an outer parity region of 2xk2 bytes in the step (c).

20. An optical recording medium (900) containing data included in one or more recording blocks, wherein the data from partitions of a plurality of ECC blocks are interleaved in the recording blocks.

21. The medium as claimed in claim 20, wherein the data from the partitions are interleaved so that each of the ECC blocks is alternately and equally selected.
